# EUROPÄISCHE PATENTSCHRIFT

(11) **EP 3 063 057 B1**
(45) Veröffentlichungstag und Bekanntmachung des Hinweises auf die Patenterteilung: **05.04.2017**
(21) Anmeldenummer: 14786448.2
(22) Anmeldetag: 16.10.2014
(51) Int. Cl.: B62K 21/04

(54) **GABELBRÜCKE ZUR VERBINDUNG VON GABELROHREN EINES MOTORRADS ODER FAHRRADS**
FORK CROWN FOR CONNECTING FORK TUBES OF A MOTORBIKE OR BICYCLE
TRAVERSE DE FOURCHE POUR RACCORDER DES TUBES DE FOURCHE D'UNE MOTOCYCLETTE OU D'UNE BICYCLETTE

(30) Priorität: 31.10.2013 DE 102013018337
(43) Veröffentlichungstag der Anmeldung: 07.09.2016
(73) Patentinhaber: Gröbner Fertigungs GmbH, 83367 Petting (DE)
(72) Erfinder: GRÖBNER, Andreas, 83329 Waging am See (DE)
(74) Vertreter: Flach, Dieter Rolf Paul
(86) Internationale Anmeldenummer: PCT/EP2014/002803
(87) Internationale Veröffentlichungsnummer: WO 2015/062707

(56) Entgegenhaltungen:
- EP-A1- 2 570 338
- WO-A1-2006/011174
- WO-A1-2010/080291

## Beschreibung

Die Erfindung betrifft eine Gabelbrücke zur Verbindung von Gabelrohren eines Motorrads oder Fahrrads gemäß dem Oberbegriff des Anspruches 1.

Gabelbrücken dieser Art weisen üblicherweise in den gegenüberliegenden Endbereichen Klemmschellen auf, in welche die beiden Gabelrohre einer Vorderradgabel eines Motorrads oder Fahrrads eingeführt und festgeklemmt werden. Neben einteiligen Klemmschellen, die nur eine einzige Klemmzunge aufweisen, sind auch zweiteilige Klemmschellen bekannt, bei denen zwei Klemmzungen in Axialrichtung übereinander angeordnet sind und mittels getrennten Klemmschrauben zugespannt werden können. Hierdurch können die Klemmschellen auch im oberen und unteren Randbereich und damit über ihre gesamte Höhe gleichmäßig zugespannt werden. Die Klemmzungen erstrecken sich dabei, ausgehend von der Schellenbasis, gleichsinnig in Umfangsrichtung, wobei die Flanschsockel, durch welche sich die Spannschraube hindurch erstreckt, übereinander angeordnet sind.

Dokument WO 2010/080291 A1 zeigt eine Gabelbrücke zur Verbindung von Gabelrohren eines Motorrads gemäß des Oberbegriffs des Anspruches 1.

Nachteilig ist bei den bekannten Klemmschellen, dass sie dann, wenn auf das eingespannte Gabelrohr ein Torsionsmoment wirkt und sich das Gabelrohr um seine Längsachse dreht, nur in einer Drehrichtung selbsthemmend sind, d.h. sich nur in einer Drehrichtung zuziehen. Wirkt auf das Gabelrohr ein Drehmoment in der entgegengesetzten Umfangsrichtung, wirkt auf die Klemmzunge(n) eine Reibkraft, welche versucht, die Klemmzunge(n) in Öffnungsrichtung zu bewegen. Derartige Drehkräfte haben somit die Tendenz, den festen Klemmsitz zwischen Klemmschelle und Gabelrohr zu lockern.
Diesem unerwünschten Effekt versucht man entgegenzutreten, indem man die Schellen mit einer entsprechend hohen Kraft zuspannt. Hierbei kann sich jedoch das Gabelrohr verformen. Eine derartige Verformung bewirkt jedoch eine Verschlechterung der Funktion der Gabel, die üblicherweise als Teleskopgabel ausgebildet ist, da das Innenrohr dann nicht mehr in der gewünschten leichtgängigen Weise im Außenrohr gleitet.

Der Erfindung liegt die Aufgabe zu Grunde, eine Gabelbrücke der eingangs genannten Art mit einer Klemmschelle zu schaffen, welche das eingespannte Gabelrohr mit möglichst geringen Zuspannkräften sicher und zuverlässig hält und dabei die Verformung des Gabelrohrs reduziert. Diese Aufgabe wird erfindungsgemäß durch eine Gabelbrücke mit den Merkmalen des Anspruches 1 gelöst. Vorteilhafte Ausführungsformen der Erfindung sind in den weiteren Ansprüchen beschrieben.

Die erfindungsgemäße Gabelbrücke weist mindestens eine Klemmschelle mit einer ersten Klemmzunge und einer zweiten Klemmzunge auf, wobei sich die erste Klemmzunge von der Schellenbasis aus in eine erste Umfangsrichtung erstreckt, während sich die zweite Klemmzunge von der Schellenbasis aus in eine zweite Umfangsrichtung erstreckt, die zur ersten Umfangsrichtung entgegengesetzt ist.

Dadurch, dass sich die beiden Klemmzungen in entgegengesetzte Umfangsrichtungen erstrecken, weist die Klemmschelle immer eine Klemmzunge auf, die sich bei einer Drehbewegung des Gabelrohrs um seine Längsachse zuzieht, und zwar unabhängig davon, mit welchem Drehsinn diese Drehbewegung erfolgt. Die Zuspannkräfte der Klemmschelle können daher reduziert werden, ohne die zuverlässige Halterung des Gabelrohrs in der Schelle zu beeinträchtigen. Diese geringeren Zuspannkräfte haben eine geringere Verformung des Gabelrohrs zur Folge. Hinzu kommt, dass auch die freien Enden der beiden Klemmzungen, die sich beim Zuspannen der Klemmschelle am stärksten bewegen, in Umfangsrichtung versetzt angeordnet sind. Hierdurch wird das Gabelrohr ebenfalls beim Zuspannen der Klemmschelle gleichmäßiger belastet und die Verformung des Gabelrohrs reduziert. Die stark reduzierten Verformungen des Gabelrohrs gewährleisten eine leichtgängige, sehr präzise Funktionsweise der Teleskopgabel.

Vorteilhafterweise erstrecken sich die Klemmzungen jeweils über einen Umfangsbereich von 100° bis 260°, insbesondere 170° bis 190°, längs des Umfangs der Klemmschelle. Besonders vorteilhaft ist es hierbei, wenn sich die Klemmzungen über einen Umfangsbereich von etwa 180° längs des Umfangs der Klemmschelle erstrecken. Hierdurch können aufgrund der Flexibilität der Klemmzungen die Klemmkräfte besonders wirkungsvoll und gleichmäßig auf das Gabelrohr übertragen werden, wobei gleichzeitig die Zuspanneinrichtungen der beiden Klemmzungen in Umfangsrichtung soweit zueinander versetzt sind, dass die sich am stärksten bewegenden freien Enden der Klemmzungen relativ weit voneinander entfernt sind.

Vorteilhafterweise weist die Klemmschelle einen Schlitz auf, der einen oberen axialen Schlitzabschnitt, einen unteren axialen Schlitzabschnitt, der in Umfangsrichtung um 170° bis 190°, insbesondere 180°, zum oberen axialen Schlitzabschnitt versetzt angeordnet ist, und einen in Umfangsrichtung verlaufenden Schlitzabschnitt aufweist, der den oberen und unteren axialen Schlitzabschnitt verbindet und die erste Klemmzunge von der zweiten Klemmzunge trennt. Hierdurch kann die Klemmschelle auf relativ einfache Weise aus einem einzigen, hülsenförmigen Teil hergestellt werden.

Vorteilhafterweise sind Schellenbasis und Klemmzungen einstückig mit dem Brückenkörper ausgebildet. Hierdurch ergibt sich eine besonders stabile und verbindungssteife Anordnung. Bei geringeren Ansprüchen, beispielsweise im Fahrradbereich, ist es jedoch auch denkbar, die Klemmschelle separat vom Brückenkörper herzustellen und nachträglich mittels geeigneter Verbindungsmittel am Brückenkörper zu befestigen.

Ein Ausführungsbeispiel der Erfindung wird nachfolgend anhand der Zeichnungen beispielhaft näher erläutert.

Es zeigen:
- Figur 1:: eine räumliche Darstellung einer Gabelbrückenanordnung mit zwei Gabelbrücken gemäß der Erfindung,
- Figur 2:: die untere Gabelbrücke von Figur 1 in Alleinstellung,
- Figur 3:: eine Vorderansicht der Gabelbrücke von Figur 2, und
- Figur 4:: eine Draufsicht auf die Gabelbrücke von Figur 2.

Die Erfindung wird nachfolgend anhand einer Gabelbrückenanordnung bzw. Gabelbrücke erläutert, die bei Motorradgabeln Verwendung findet. Ein Einsatz bei Fahrrädern ist jedoch ebenfalls möglich.

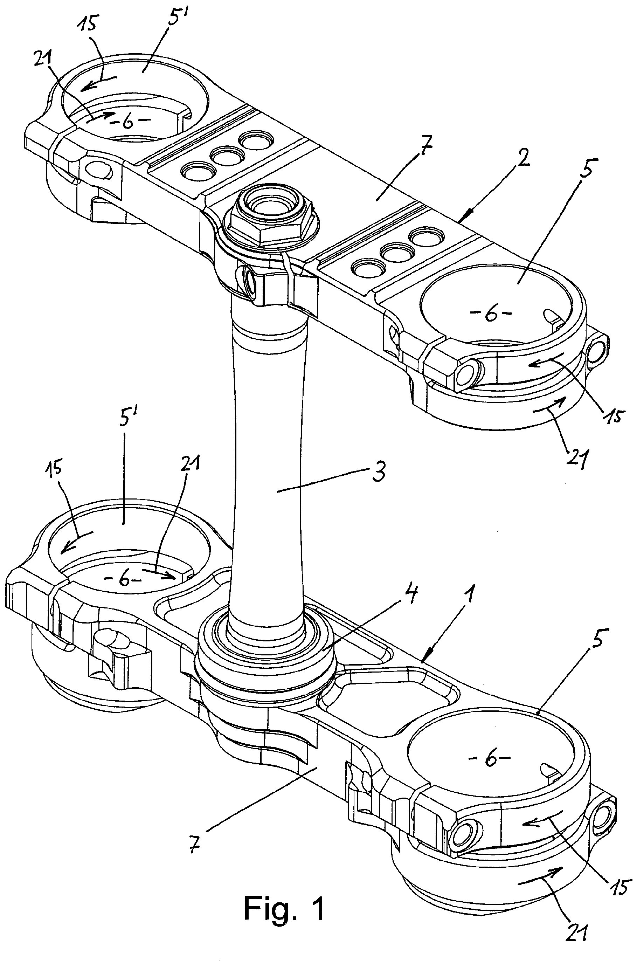

Aus Figur 1 ist eine Gabelbrückenanordnung mit einer unteren Gabelbrücke 1 und einer oberen Gabelbrücke 2 ersichtlich, die mittels eines mittigen Lenkkopfschafts 3 miteinander verbunden sind.

Im unteren Endbereich des Lenkkopfschafts 3 ist ein unterer Lagerring 4 vorgesehen, der zusammen mit einem nicht dargestellten oberen Lagerring eine Lageranordnung bildet, mit dem die Gabelbrückenanordnung und damit die gesamte Gabel des Motorrads in einem nicht dargestellten Lenkrohr eines Motorradrahmes drehbar gelagert ist.

Jede Gabelbrücke 1, 2 weist zwei Klemmschellen 5,5' auf, die an den gegenüberliegenden Enden der Gabelbrücken 1, 2 angeordnet sind. Die Klemmschellen 5, 5' sind jeweils im Wesentlichen zylinder- oder hülsenförmig ausgebildet und umschließen Aufnahmeräume 6, durch die sich die zu klemmenden Gabelrohre hindurch erstrecken. Die Längsachse der oberen Klemmschelle 5 fluchtet dabei mit der Längsachse der unteren Klemmschelle 5, während die Längsachse der oberen Klemmschelle 5' mit der Längsachse der unteren Klemmschelle 5' fluchtet. Die von der Gabelbrückenanordnung gehaltenen Gabelrohre verlaufen daher parallel zueinander.

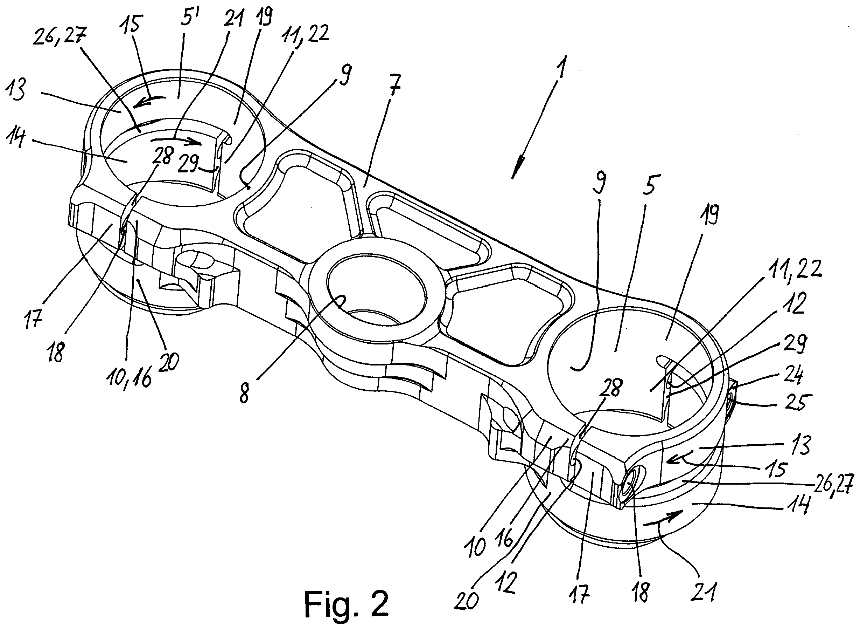

Im Folgenden wird der Aufbau der unteren Gabelbrücke 1 anhand der Figuren 2 bis 4 näher erläutert. Die obere Gabelbrücke 2 ist bezüglich der für die Erfindung wesentlichen Teile gleich oder ganz ähnlich aufgebaut.

Wie aus Figur 2 ersichtlich, sind die beiden Klemmschellen 5, 5' der Gabelbrücke 1 an einen dazwischen liegenden Brückenkörper 7 angeformt, der möglichst stabil und verbindungssteif ausgebildet ist. Mittig im Brückenkörper 7 ist eine Öffnung 8 vorgesehen, die zur Aufnahme und Befestigung des unteren Endbereichs des Lenkkopfschafts 3 dient.

Die beiden Klemmschellen 5, 5' sind einstückig mit dem Brückenkörper 7 ausgebildet und bestehen aus dem selben Material. Zweckmäßigerweise handelt es sich bei diesem Material um eine hochfeste Aluminiumlegierung oder um ein anderes Metall wie beispielsweise Stahl. Das Material wird so gewählt, dass einerseits die Gabelbrücke 1 die gewünschte hohe Festigkeit und Stabilität aufweist und andererseits die Klemmschellen 5, 5' eine gewisse Flexibilität haben, um zugespannt und geöffnet werden können.

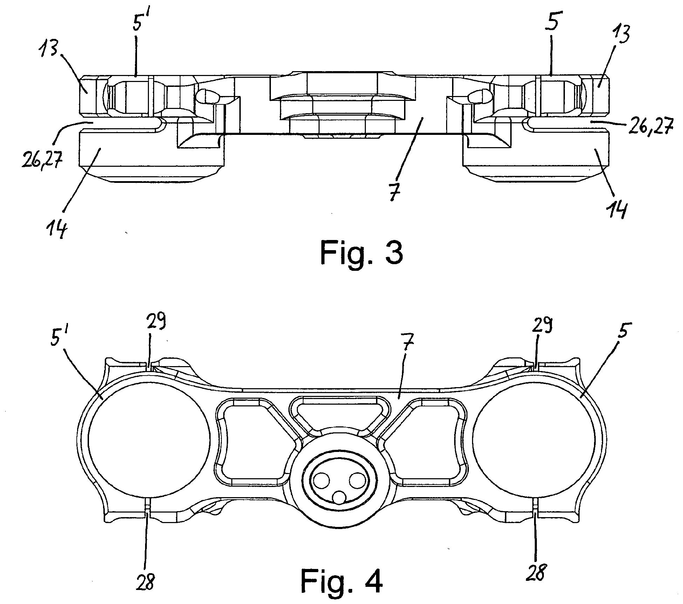

Beide Klemmschellen 5, 5' sind symmetrisch zur vertikalen Mittelebene der Gabelbrücke 1 angeordnet und im Übrigen gleich ausgebildet. Die Klemmschellen 5, 5' weisen im Übergangsbereich zum Brückenkörper 7 eine formstabile Schellenbasis 9 auf. Diese Schellenbasis 9 erstreckt sich im gezeigten Ausführungsbeispiel über etwa 180° des Gesamtumfangs der Klemmschellen 5, 5'. Die den Aufnahmeraum 6 begrenzende Fläche der Schellenbasis 9 ist somit in der in Figur 4 gezeigten Draufsicht halbkreisförmig, wobei sie sich über die gesamte axiale Länge der Klemmschelle 5, 5' erstreckt.

Da die beiden Klemmschellen 5, 5' den gleichen Aufbau haben, wird im Folgenden nur die Klemmschelle 5 näher beschrieben. Für die Klemmschelle 5' gilt diese Beschreibung in entsprechender Weise.

Wie aus Figur 2 ersichtlich, weist die Schellenbasis 9 einen radial nach außen vorstehenden ersten Flanschsockel 10 auf, der sich in der oberen Hälfte der Klemmschelle 5 befindet und in einem ersten Umfangsendbereich 16 der Schellenbasis 9 angeordnet ist, sowie einen radial nach außen vorstehenden zweiten Flanschsockel 11, der sich in der unteren Hälfte der Schellenbasis 9 befindet und in einem gegenüberliegenden zweiten Umfangsendbereich 22 der Schellenbasis 9 angeordnet ist. Beide Flanschsockel 10, 11 weisen jeweils eine Gewindebohrung 12 auf, die zum Einschrauben einer nicht dargestellten Klemmschraube dient.

Die Klemmschelle 5 weist ferner jeweils eine Klemmzungenanordnung mit einer ersten, oberen Klemmzunge 13 und einer getrennt von dieser bewegbaren unteren, zweiten Klemmzunge 14 auf. Die erste Klemmzunge 13 erstreckt sich von einem dritten Umfangsendbereich 19 der Schellenbasis 9 halbkreisförmig in einer ersten Umfangsrichtung 15 bis in die Nähe des gegenüberliegenden ersten Umfangsendbereichs 16 der Schellenbasis 9, d.h. bis in die Nähe des ersten Flanschsockels 10.

Am freien Endbereich der ersten Klemmzunge 13 ist ein radial nach außen vorstehender dritter Flanschsockel 17 mit einer Bohrung 18 vorgesehen, die zur Gewindebohrung 12 fluchtet und zum Hindurchführen der nicht dargestellten Klemmschraube dient. Die zweite Klemmzunge 14 erstreckt sich von einem dritten Umfangsendbereich 20 der Schellenbasis 9, der unterhalb des ersten Umfangsendbereichs 16 liegt, in einer zweiten Umfangsrichtung 21, die entgegengesetzt zur ersten Umfangsrichtung 15 ist, bis in die Nähe des zweiten Umfangsendbereichs 22 der Schellenbasis 9, der unterhalb des dritten Umfangsendbereichs 19 liegt und den zweiten Flanschsockel 11 trägt. Weiterhin ist im freien Umfangsendbereich der zweiten Klemmzunge 14 ein radial nach außen vorspringender vierter Flanschsockel 24 mit einer Bohrung 25 vorgesehen, die zur Gewindebohrung 12 fluchtet und zum Hindurchführen einer nicht dargestellten zweiten Klemmschraube dient, mit der das freie Ende der zweiten Klemmzunge 14 gegen die Schellenbasis 9 gezogen werden kann, um das Gabelrohr festzuklemmen. Die beiden Flanschsockel 10, 17 bilden damit zusammen mit einer Spannschraube eine erste Zuspanneinrichtung, mit der die erste Klemmzunge 13 in der ersten Umfangsrichtung 15 gezogen werden kann, um ein Gabelrohr fest zu klemmen, während die Flanschsockel 11, 24 zusammen mit einer Spannschraube eine zweite Zuspanneinrichtung bilden, mit der die zweite Klemmzunge 14 in der zweiten Umfangsrichtung 21, die entgegengesetzt zur ersten Umfangsrichtung 15 ist, gezogen werden kann, um das Gabelrohr in unmittelbarer axialer Nachbarschaft zur ersten Klemmzunge 13 festzuklemmen.

Die erste Klemmzunge 13 ist von der zweiten Klemmzunge 14 durch einen Schlitz 26 getrennt, der einen in Umfangsrichtung der Klemmschelle 5 verlaufenden Schlitzabschnitt 27, einen oberen, in Axialrichtung der Klemmschelle 5 verlaufenden Schlitzabschnitt 28 und einem unteren, in Axialrichtung der Klemmschelle 5 verlaufenden Schlitzabschnitt 29 aufweist, der im gegenüberliegenden Umfangsbereich der Klemmschelle 5 angeordnet ist. Der Schlitz 26 hat damit einen S-förmigen Verlauf.

Im Rahmen der Erfindung sind eine Vielzahl von Variationen möglich. Beispielsweise ist es möglich, dass die Klemmschellen 5, 5' mehr als zwei Klemmzungen 13, 14 aufweisen, beispielsweise 3 oder 4 Klemmzungen. In diesem Fall ist es vorteilhaft, wenn sich eine Klemmzunge jeweils in entgegengesetzter Richtung erstreckt wie die benachbarte Klemmzunge. Weiterhin ist es auch möglich, dass die vertikalen Schlitzabschnitte 28, 29 nicht um 180° versetzt zueinander angeordnet sind, sondern um einen anderen Winkelbetrag, beispielsweise 100° bis 260°, insbesondere 170° bis 190°. Zweckmäßigerweise sind beide Klemmschellen 5, 5' gleich ausgebildet. Unterschiedliche Ausbildungen sind jedoch grundsätzlich möglich.

## Patentansprüche

1. Gabelbrücke zur Verbindung von Gabelrohren eines Motorrads oder Fahrrads, mit einem Brückenkörper (7) und an den Brückenkörper (7) angeformten oder an diesem befestigten Klemmschellen (5, 5') zum Klemmen der Gabelrohre, wobei mindestens eine Klemmschelle (5, 5') aufweist:
- eine Schellenbasis (9),
- eine Klemmzungenanordnung, die eine erste Klemmzunge (13) und eine zweite Klemmzunge (14) umfasst, die in Axialrichtung der Klemmschelle (5, 5') hintereinander angeordnet sind, sich von der Schellenbasis (9) aus in Umfangsrichtung erstrecken, zusammen mit der Schellenbasis (9) einen Aufnahmeraum (6) für ein Gabelrohr umschließen und jeweils einen Umfangsendbereich aufweisen, welcher der Schellenbasis (9) angenähert ist,
**dadurch gekennzeichnet, dass** sich die erste Klemmzunge (13) von der Schellenbasis (9) aus in eine erste Umfangsrichtung (15) erstreckt, und dass sich die zweite Klemmzunge (14) von der Schellenbasis (9) aus in eine zweite Umfangsrichtung (21) erstreckt, die zur ersten Umfangsrichtung (15) entgegengesetzt ist.

2. Gabelbrücke nach Anspruch 1, **dadurch gekennzeichnet, dass** sich die Klemmzungen (13, 14) jeweils über einen Umfangsbereich von 100° bis 260°, insbesondere 170° bis 190°, längs des Umfangs der Klemmschelle (5, 5') erstrecken.

3. Gabelbrücke nach Anspruch 1 oder 2, **dadurch gekennzeichnet, dass** die Klemmschelle (5, 5') einen Schlitz (26) aufweist, die einen oberen axialen Schlitzabschnitt (28), einen unteren axialen Schlitzabschnitt (29), der in Umfangsrichtung um 170° bis 190°, insbesondere 180°, zum oberen axialen Schlitzabschnitt (28) versetzt angeordnet ist, und einen in Umfangsrichtung verlaufenden Schlitzabschnitt (27) aufweist, der den oberen und unteren axialen Schlitzabschnitt (28, 29) verbindet und die erste Klemmzunge (13) von der zweiten Klemmzunge (14) trennt.

4. Gabelbrücke nach einem der vorhergehenden Ansprüche, **dadurch gekennzeichnet, dass** Schellenbasis (9) und Klemmzungen (13, 14) einstückig mit dem Brückenkörper (7) ausgebildet sind.

## Claims

1. A fork top bridge for connecting steer tubes of a motorcycle or bicycle, having a bridge body (7) and clamping collars (5, 5') integrally formed onto or secured to the bridge body, for clamping the steer tubes, wherein at least one clamping collar (5, 5') has the following:
- a collar base (9),
- a clamping tongue assembly, which includes a first clamping tongue (13) and a second clamping tongue (14), which are located in line with one another in the axial direction of the clamping collar (5, 5'), extend outward in the circumferential direction from the collar base (9), together with the collar base (9) enclose a receptacle chamber (6) for a steer tube, and each have a circumferential end area, which is brought closer to the collar base (9),
**characterized in that** the first clamping tongue (13) extends from the collar base (9) outward in a first circumferential direction (15); and that the second clamping tongue (14) extends outward from the collar base (9) in a second circumferential direction (21), which is the opposite of the first circumferential direction (15).

2. The fork top bridge of claim 1, **characterized in that** the clamping tongues (13, 14) each extend over a circumferential area of 100° to 260°, in particular 170° to 190°, along the circumference of the clamping collar (5, 5').

3. The fork top bridge of claim 1 or 2, **characterized in that** the clamping collar (5, 5') has a slot (26), which has an upper axial slot segment (28), a lower axial slot segment (29), which is offset from the upper axial slot segment (28) in the circumferential direction by 170° to 190°, in particular 180°, and a slot segment (27) extending in the circumferential direction, which segment connects the upper and lower axial slot segments (28, 29) and divides the first clamping tongue (13) from the second clamping tongue (14).

4. The fork top bridge of one of the foregoing claims, **characterized in that** the collar base (9) and clamping tongues (13, 14) are embodied in one piece with the bridge body (7).

## Revendications

1. Traverse de fourche pour raccorder des tubes de fourche d'une motocyclette ou d'une bicyclette, comprenant un corps de traverse (7) et des colliers de serrage (5, 5') conformés sur le corps de traverse (7) ou fixés sur celui-ci, destinés à serrer les tubes de fourche, dans laquelle l'un au moins des colliers de serrage (5, 5') comprend :
- une embase de collier (9),
- un agencement de languettes de serrage, qui inclut une première languette de serrage (15) et une seconde languette de serrage (14), lesquelles sont agencées l'une derrière l'autre dans la direction axiale du collier de serrage (5, 5'), s'étendent en direction périphérique depuis l'embase de collier (9), enserrent conjointement avec l'embase de collier (9) une chambre de réception (6) pour un tube de fourche, et comprennent chacune une zone terminale périphérique qui se rapproche de l'embase de collier (9),
**caractérisée en ce que** la première languette de serrage (13) s'étend depuis l'embase de collier (9) dans une première direction périphérique (15), et **en ce que** la seconde languette de serrage (14) s'étend depuis l'embase de collier (9) dans une seconde direction périphérique (21) qui est opposée à la première direction périphérique (15).

2. Traverse de fourche selon la revendication 1, **caractérisée en ce que** les languettes de serrage (13, 14) s'étendent respectivement sur une zone périphérique de 100° à 260°, en particulier 170° à 190°, le long de la périphérie du collier de serrage (5, 5').

3. Traverse de fourche selon la revendication 1 ou 2, **caractérisée en ce que** le collier de serrage (5, 5') comporte une fente (26) qui comprend une portion de fente axiale inférieure (29), qui est agencée en décalage en direction périphérique sur 170° à 190°, en particulier 180°) par rapport à la portion de fente axiale supérieure (28), et une portion de fente (27) qui s'étend en direction périphérique, qui relie la portion de fente axiale supérieure et la portion de fente axiale inférieure (28, 29) et qui sépare la première languette de serrage (13) vis-à-vis de la seconde languette de serrage (14).

4. Traverse de fourche selon l'une des revendications précédentes, **caractérisée en ce que** l'embase de collier (9) et les languettes de serrage (13, 14) sont réalisées d'un seul tenant avec le corps de traverse (7).
